# EUROPEAN PATENT SPECIFICATION

(11) **EP 2 993 315 B1**
(45) Date of publication and mention of the grant of the patent: **19.04.2017**
(21) Application number: 14183670.0
(22) Date of filing: 05.09.2014
(51) Int. Cl.: F01D 25/28

(54) **Apparatus for an assembly tool for mounting or dismantling, replacement and maintenance of a component of an engine**
Vorrichtung für ein Werkzeug zur Montage oder Demontage, Ersetzung und Wartung eines Bauteils eines Motors
Appareil pour outil d'assemblage pour le montage ou le démontage, le remplacement et l'entretien de composant d'un moteur

(43) Date of publication of application: 09.03.2016
(73) Proprietor: General Electric Technology GmbH, 5400 Baden (CH)
(72) Inventor: Imfeld, Jost, 5246 Scherz (CH); Mathews, Hans-Christian, 8057 Zürich (CH)
(74) Representative: Bernotti, Andrea

(56) References cited:
- EP-A1- 2 236 939
- GB-A- 2 306 155
- US-A1- 2010 287 950

## Description

### Technical Field

The present invention relates to an apparatus as an integral and essential part for an assembly tool for mounting or dismantling, replacement and maintenance of a component of an engine or operational arrangement.

The component of an operational arrangement concerns for example a can-combustor of a gas turbine engine. Moreover, an operational arrangement concerns also every other part or device that may be subject to an assembly or disassembly procedure.

As one example of many for a better understanding of the invention refers to a gas turbine engine having a pattern of several can-combustors disposed around rotational contour.

Can-combustors are self-contained cylindrical combustion chambers. Each "can" has its own fuel injector, igniter, liner, and casing. The primary air from the compressor is guided into each individual can, where it is decelerated, mixed with fuel, and then ignited. The secondary air also comes from the compressor, where it is fed outside of the liner (inside of which is where the combustion is taking place). The secondary air is then fed, usually through slits in the liner, into the combustion zone to cool the liner via thin film cooling.

In most applications, multiple can-combustors are arranged around the central axis of the engine, and their shared exhaust is fed to the turbine(s). Can-combustors were most widely used in early gas turbine engines, owing to their ease of design and testing (one can test a single can, rather than have to test the whole system). Can-combustors are easy to maintain, as only a single can needs to be removed, rather than the whole combustion section.

The mentioned gas turbine engine comprising a compressor, downstream of the compressor several can-combustors, whereas the hot gases of the can-combustors are admitted to a turbine, whereas the can-combustors operating on the basis of can-combustor architecture.

Additionally, another gas turbine engine comprising a compressor, downstream of the compressor first can-combustor arrangement, whereas the hot gases of the first can-combustor arrangement are admitted to a first turbine or to a second can-combustor arrangement, whereas the hot gases of the second can-combustor arrangement are admitted to a second turbine or to a subsequent steam cycle, whereas at least one can-combustor arrangement operating on the basis of a can-combustor architecture.

Furthermore, at least one can-combustor comprising one or more disposed premixing burners or semi-premixing burners. A first turbine is connected to receive working gas from the first can-combustor arrangement, a second can-combustor arrangement is connected to receive exhausted working gas from the first turbine and to deliver working gas to the second turbine, wherein the second can-combustor arrangement comprises an annular duct forming a combustion space extending in a flow direction from outlet of the first turbine to an inlet of the second turbine, and means for introducing fuel into the second can-combustor arrangement for self-ignition combustion.

Additionally, the operational use of the apparatus of the present invention also refers preferably to a further type of combustor, namely is the cannular combustor. Like the can-combustor, can annular combustors have discrete combustion zones contained in separate liners with their own fuel-injectors. Unlike the can-combustor, all the combustion zones share a common ring (annulus) casing. Each combustion zone no longer has to serve as a pressure vessel. The combustion zones can also "communicate" with each other via liner holes or connecting tubes that allow some air to flow circumferentially. The exit flow from the cannular combustor generally has a more uniform temperature profile, which is better for the turbine section. It also eliminates the need for each chamber to have its own igniter. Once the fire is lit in one or two can-combustors, it can easily spread to and ignite the others.

### Background of the Invention

In a combustor mounting/demounting arrangement with the conventional technique according to state of the art, when replacing the combustor for use in the gas turbine engine, the piping and alike that are disposed around the combustor are demounted, and then a scaffold is assembled. A workman gets on the scaffold and operates an overhead crane to thereby sling and replace the combustor. For this reason it is necessary to remove or restore a number of piping that have been assembled around the combustor over a wide range, and it is also necessary to perform the work of assembling and disassembling the scaffold

As a result, in the above-mentioned conventional operation, a large number of man-hours are needed, and a long work term is spent, for replacing the combustor and the work incidental thereto.

Accordingly, in the above-mentioned conventional operation the work of the scaffold is performed at an overhead position, and workmen do not always have the appropriate posture, which is dangerous. Further, in the above-mentioned conventional operation, the work such as crane operation and slinging work requires a high level of skill, but is low in working efficiency. The result is that during the performance of the work, the combustor or the main body of the gas turbine is sometimes impaired or damaged.

Documents GB 2 306 155, EP 2 236 939 and US 2010/287950 disclose assembly tool for mounting or dismantling, replacement and maintenance of a component of an engine.

With reference to US 5,911,680, in a gas turbine that is equipped, on a casing thereof, with a plurality of combustors in the circumferential direction thereof, there is provided a rail which is supported on a rail receiving stand that is movable on the ground and which is disposed in the form of a circular annulus or circular arc in correspondence with the disposition of the combustors. A slide mechanism is mounted on the rail so as to movable along the rail and is mounted so that the slide mechanism can enter into and retreat from the interior of the casing.

A grip mechanism is mounted on an end portion of the slide mechanism and grips constituent parts of the combustor, such as a tail pipe, a nozzle and an inner cylinder. Also, in another aspect of the present embodiment, there are provided a rail that is shaped like a circular arc and is revolvably supported on the revolvable carriage, and a grip mechanism that grips constituent parts of the combustor.

### Summary of the Invention

The basic idea of the present invention concerning of an apparatus as an integral and essential part of an assembly tool for mounting or dismantling, replacement and maintenance of a component -mostly designed as an operational component- of an engine, in order to enable the adjustability in radial position in a very precise and safe matter.

In addition the mentioned apparatus has the function of an eccentric hook, which can be used as fixation or connection to a counterpart of the engine housing, for example gas turbine engine housing, in order to stabilize the position of the lifting device and to reduce the degrees of freedom.

Generally, this apparatus can be used for every specifically designed assembly tool for mounting or dismantling, replacement and maintenance of engine components in different fields, where a safe and precise assembly/lifting is wanted or required.

The apparatus comprising the function of an eccentric hook and consists of a moveable/turnable inner ring and a stationary outer structure/casing. The inner ring and the outer structure/casing are both slotted whereas the slot of the inner ring is eccentric. Depending on the angle of the inner ring the hook gets closed and secured.

Furthermore, it is foreseen that the outer structure/casing has an additional defined groove or cut out which it enables later to adjust the radial position with respect to the fixation or connection to the counterpart. This is technically feasible due to the combination of the eccentric slot on the inner ring and the additional groove on the outer structure/casing.

One of the essential advantage of the invention is also to be seen that the other way around is also feasible in the sense that the outer structure of the apparatus, e.g. the outer structure/casing, is movable/turnable while the inner ring behaves stationary.

The angle of the inner ring with respect to the fixation or connection to a counterpart can be adjusted by an electrical driven worm gear which has a high precision features and, additionally, is self-locking. If an electrical worm gear is not required an alternative could be to use a worm gear with the option to manually change the required angle.

The operational capabilities of the inner ring can be extended through different angles with respect to the static position of the outer structure/casing. Therefore, different combinations of angles are feasible depending on the location of the eccentric or centric slot.

Referring to various applications of the apparatus in different field, the provided assembly tool can be adjusted with the above mentioned eccentric hook in the right angle with respect to the radial position of the component, also with respect to a can-combustor of a gas turbine engine.

Therefore, the assembly tool for mounting and dismantling of a component consists of an assembly tool, linear drivers, wheels, the above mentioned eccentric hook for fixation of the component to the engine housing, optional spacers which build the interface to the component by use of existing lifting points on the single machine part, two different (also optional) adapters are available to enable access for all components and lifting points for the main crane.

During the assembly procedure of the upper situated components (wherever feasible also for the lower situated operational arrangements) the assembly tool is always connected to the crane. The assembly tool can be separated in two structures:
The inner structure which is directly connected to the component by using existing lifting points with respect to the mentioned pieces, and the outer structure which contains the assembly tool and the two rails. Inner and outer structures are connected and enable to axial shift extracting the component by use of linear drivers.

A second assembly tool for mounting and dismantling of a component consists of an assembly tool with additional frame and is directed to lower situated components. Due to the fact that a crane is not always useable for the lower situated components, the frame can be combined with a fork lifter or other lifting device enables to extract the lower situated components. The angle of the assembly tool can be changed with the frame. In case that a fork lifter cannot guarantee the necessary movement it is possible to use supplementary auxiliary means, which are directly or indirectly operatively connected with the assembly tool with additional frame.

The adjustment of the angle will be managed by the crane or directly by the frame, while the eccentric hook is connected to the engine housing (in the case of the can-combustors to the gas turbine housing). In order to determine the correct angle of the component an angle gage will be used.

Accordingly, the mentioned adapters are available to enable access for all components of an engine, also for can-combustors of a gas turbine. A special feature of this concept is the eccentric hook which is driven by a worm gear. The eccentric hook secures the assembly tool during extraction of the component, while it is connected to the engine housing and enables to give a force in axial direction of the component.

Additionally, it makes thus possible to adjust the position of the component in radial direction. A clearance in between the stud and the eccentric hook should be considered so that the crane operator can see whether the stand-alone assembly tool or the assembly tool with additional frame is free from the engine housing or not.

In any case, regardless of which tool is used, the assembly tool will be mounted to the component by use of several bolts. From now on the component is connected to the assembly tool and ready for extraction. The same procedure also applies to an assembly tool with additional frame.

Therefore, the remaining bolts on the component connecting flange, that are still supporting the component, will be removed. If necessary it can adjust the height with eccentric hook to compensate the elasticity of the assembly tool.

Then, it will be started to shift the component outside the respective engine housing and ready for lifting. The next step is to tighten the downstream ropes, and subsequently adjusting the correct position by using the crane, when such a tool can be used with respect to the position of components.

The eccentric hook shall be in clearance position and the assembly tool with the respective component shall be loose. The final step consists to disconnect the eccentric hook from the engine housing so that the assembly tool together with the component can be lifted and brought to the lay down area.

Adjustment of component in radial position and in angle in relation to axis of mounting position with the use of the eccentric hook shall be possible during complete shifting path in order to align it with approaching position.

Accordingly, the tool for mounting and dismantling of component shall take into account confined space between neighbor components as well as demand minimized supporting the features with respect to the respective engine housing and in addition not colliding with nearby auxiliary systems.

Generally, the tool for mounting and dismantling shall have modular design, additional features for upper and lower situated components, which fits with all the arrangement locations and allows simultaneous maintenance operations.

The mentioned counterpart with respect to the eccentric hook will be bolted to the extra foreseen machined surface on the engine housing and is made up of two side walls connected with a horizontal bar. A system of linear drivers together with several wheels has been chosen as preferred solution to push/pull the component inside the assembly tool.

The process of the disassembly procedure is as follows: As a first step the majority of portal/nuts will be removed. Then the spacers will be assembled on the component upstream lifting points. Afterwards the assembly tool will be lifted to the component by use of the crane so that the eccentric hook is placed correctly to the engine housing. After securing of the eccentric hook, for example with electrically leaded means, the correct angle between engine housing and assembly tool will be adjusted by use the crane, with the procedure that downstream situated ropes get loose as consequence.

A similar sequence takes place for the lower situated components, when the assembly tool with additional frame reaches the application.

Accordingly, the radial adjustability due the eccentric hook and the axially sliding feature of the lifting tool which a highly precise and fast disassembly/assembly procedure while using the connection to the engine housing and the main crane resp. the frame, and subsequently it results a consistent reduction of maintenance time and cost.

The present invention can be used during planned or unplanned inspections, referring to servicing one or several components, especially with respect to any components, and the mentioned dis-/assembly tools are used in all arrangements, regardless of their initial position.

For example, if the component is designed as a can-combustor, it is provided with a premix burners for the combustion of the gas turbine engine, these should preferably be formed by the combustion process and objects according to the documents EP 0 321 809 A1 and/or EP 0 704 657 A2, wherein these documents forming integral parts of the present description.

In particular, said premix burners can be operated with liquid and/or gaseous fuels of all kinds. Thus, it is readily possible to provide different fuels within the individual cans. This means also that a premix burner can also be operated simultaneously with different fuels.

Furthermore, the can-combustor is operated with a premix burner, for example according to EP 0 321 809 A1. This embodiment relating to a burner consisting of hollow part-cone bodies making up a complete body, having tangential air inlet slots and feed channels for gaseous and liquid fuels, wherein in that the centre axes of the hollow part-cone bodies have a cone angle increasing in the direction of flow and run in the longitudinal direction at a mutual offset.

A fuel nozzle, which fuel injection is located in the middle of the connecting line of the mutually offset centre axes of the part-cone bodies, is placed at the burner head in the conical interior formed by the part-cone bodies.

Furthermore, EP 0 704 657 A2, relating to a burner arrangement for a heat generator, substantially consisting of a swirl generator, substantially according to EP 0 321 809 A1, for a combustion air flow and means for injection of fuel , as well of a mixing path provided downstream of said swirl generator, wherein said mixing path comprises transaction ducts extending within a first part of the path in the flow direction for transferring a flow formed in said swirl generator into the cross-section of flow of said mixing path, that joins downstream of said transition ducts.

### Brief Description of the Figures

The invention shall subsequently be explained in more detail based on exemplary embodiments in conjunction with the drawing. In the drawing:
- Figure 1: shows a general overview of an apparatus for an assembly tool for mounting or dismantling, replacement and maintenance of a component of an engine;
- Figure 2 a-d: shows various different ring positions of the apparatus for an assembly tool for mounting or dismantling, replacement and maintenance of a component according to Figure 1;
- Figure 3: shows the eccentricity of the slot on the inner ring of the apparatus for an assembly tool for mounting or dismantling, replacement and maintenance of component, in form of an eccentric hook according to Figure 1;
- Figure 4a, b: shows open position of the eccentric hook (Figure 4a) and closed position of the eccentric hook (Figure 4b);
- Figure 5a, b: shows a counterpart with respect to the eccentric hook (Figure 5a) and the eccentric hook connected to the counterpart (Figure 5b);
- Figure 6: shows a holistically view showing an assembly tool for mounting or dismantling, replacement and maintenance of an operational arrangement specifically designed as an operational component for use in an engine;
- Figure 7: shows a holistically view showing an assembly tool with an additional frame combined with a fork lifter or other lifting device for mounting or dismantling, replacement and maintenance of an operational arrangement specifically designed as an operational component for use in an engine.

### Detailed Description of exemplary Embodiments

The starting point of an exemplary embodiment is an engine in closed condition which has a pattern of several components disposed around of center point or area of an engine.

A typical embodiment consists of an engine in closed condition having a pattern of several operational components disposed around of rotation contour for example with respect to the rotor of the engine.

The main target is to disassemble one or more components, one in side, out from working location and after service move it back to desired place.

The following notes referring to a "can-combustor" serve only for better understanding the operational area of the apparatus.

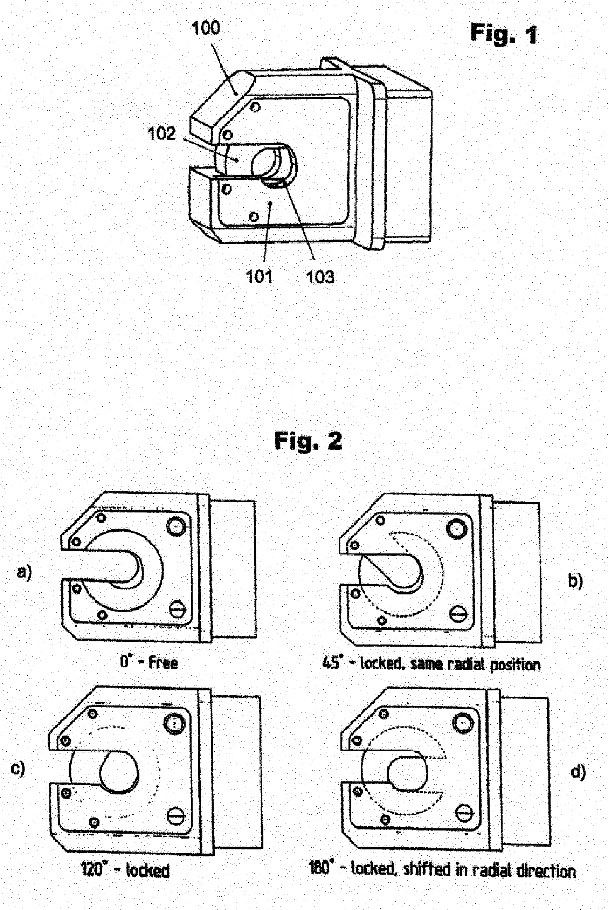

The basic idea of the present embodiment concerning of an apparatus as an integral and essential part of an assembly tool for mounting or dismantling, replacement and maintenance of a component, mostly designed as an operational component) of an engine, in order to enable the adjustability in radial position in a very precise and safe matter (see Figure 1).

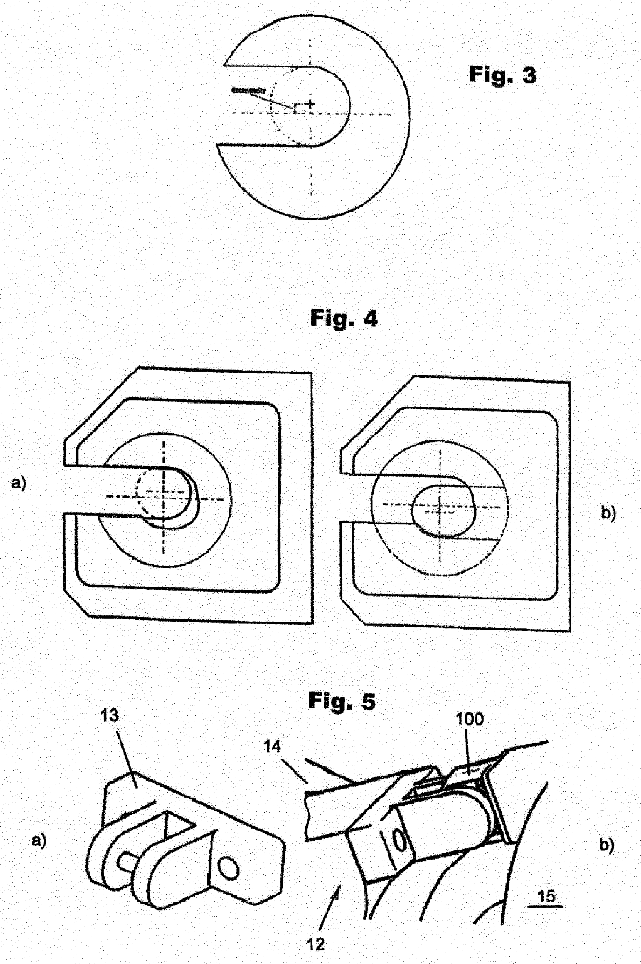

In addition, the mentioned apparatus 100 has the function of an eccentric hook which can be used for fixation or connection to a counterpart (see Figures 5a, 5b) of the engine housing (for example gas turbine engine housing), in order to stabilize the position of the lifting device and to reduce the degrees of freedom.

The counterpart 13 as illustrated in Figure 5a will be bolted to the extra foreseen machined surface on the engine housing 12 and is made up of two side walls connected with a horizontal bar. A system of linear drivers together with several wheels has been chosen as preferred solution to push/pull the component inside the assembly tool 1.

Figure 5b shows a particular counterpart 13 which operates in connection with the eccentric hook 100 to achieve a solid detachable connection between the assembly tool 1 and the engine housing 12, serving both for the assembly and dismantling of the component 15.

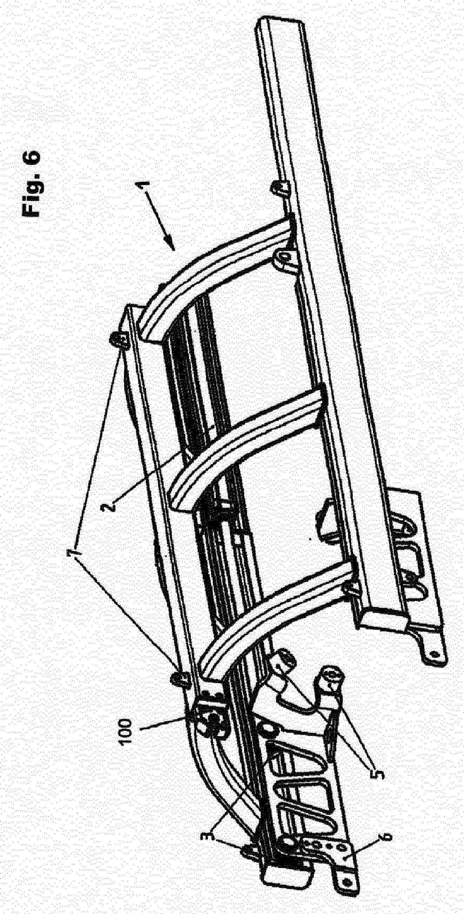

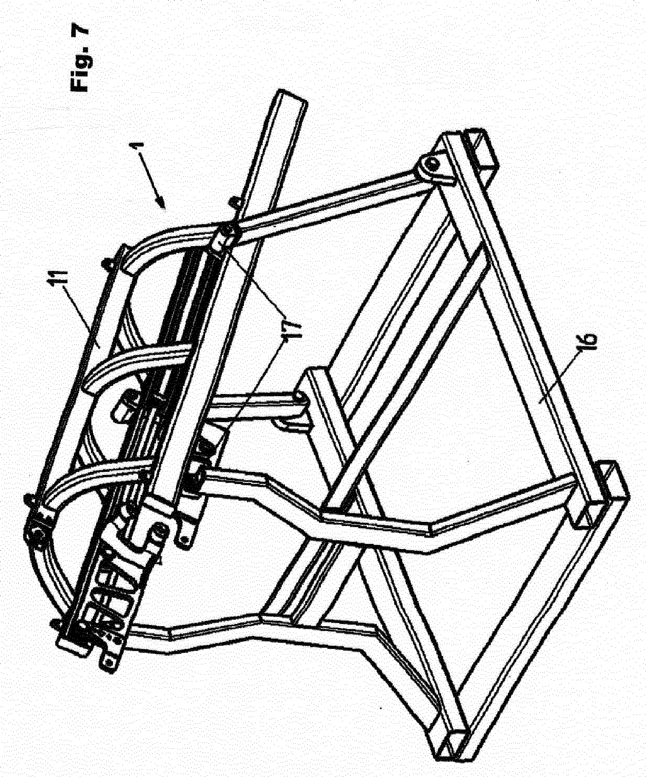

Generally, this apparatus resp. the eccentric hook 100 can be used for every specifically designed assembly tool (see Figures 6, 7) for mounting or dismantling, replacement and maintenance of engine components in different fields, where a safe and precise assembly/lifting is wanted or required.

The apparatus comprising the function of an eccentric hook and consists of a moveable/turnable inner ring 102 and a stationary outer structure/casing 101. The inner ring 102 and the outer structure/casing 101 are both slotted, whereas the slot of the inner ring 102 is eccentric (see Figure 3). Depending on the angle of the inner ring the hook gets closed and secured.

Furthermore, it is foreseen that the outer structure/casing 101 has an additional defined groove or cut out with an eccentric disposition 103 which it enables later to adjust the radial position with respect to the fixation or connection to the counterpart (see Figures 5a, 5b). This is technically feasible due to the combination of the eccentric slot (see Figure 3) on the inner ring 102 and the additional groove on the outer structure/casing 101.

One of the essential advantage of the embodiment concerns also to be seen that the other way around is also feasible in the sense that the outer structure of the apparatus, e.g. the outer structure/casing 101 is movable/turnable while the inner ring 102 behaves stationary or contrariwise, namely, that the outer ring 102 is movable/turnable while the outer structure/casing 101 behaves stationary, whereby the introduction of the second mentioned embodiment corresponds to an action of a person skilled in the art.

The angle of the inner ring with respect to the fixation or connection to a counterpart can be adjusted by an electrical driven worm gear which has a high precision features and, additionally, is self-locking. If an electrical worm gear is not required an alternative could be to use a worm gear with the option to manually change the required angle.

The operational capabilities of the inner ring 102 can be extended through different angles with respect to the static position of the outer structure/casing 101 (see Figures 2a-2d). Therefore, different combinations of angles are feasible depending on the location of the eccentric or centric slot (see Figures 2 and 4).

Referring to various applications of the apparatus in different field, the provided assembly tool (see Figures 6, 7) can be adjusted with the above mentioned eccentric hook 100 in the right angle with respect to the radial position of the component, for example with respect to a can-combustor of a gas turbine engine.

Therefore, the assembly tool for mounting and dismantling of a component consists of an assembly tool, linear drivers, wheels, the above mentioned eccentric hook for fixation of the component to the engine housing, optional spacers which build the interface to the component by use of existing lifting points on the single machine part, two different (also optional) adapters are available to enable access for all components and lifting points for the main crane.

As illustrated in Figure 6 the auxiliary tool for mounting and dismantling of a component of an engine comprising basically an assembly tool 1 with two rails which is characterized by several features and enables to dis-/assemble the component compared to all position.

The features are designed to adjust the position of the component during assembly procedure and to guarantee a precise extraction of the component while using an eccentric hook connection 100 to the engine housing and the crane (not shown).

Therefore, the auxiliary tool for mounting and dismantling of a component consists of an assembly tool 1, linear drivers 2, wheels 3, an electrical driven eccentric hook 100 for fixing it to the engine housing, optional spacers 5 which build the interface to the component by use of existing lifting points on the component, two different (also optional) adapters 6 to enable access for all components and lifting points 7 for the main crane are available.

During the assembly procedure of the upper components (wherever feasible also for the lower situated components) the assembly tool 1 is always connected to the crane (not shown). The assembly tool 1 can be separated in two structures. The inner structure which is directly connected to the components by using existing lifting points 7 with respect to the component, and the outer structure which contains the assembly tool 1 and the two rails. Inner and outer structures are connected and enable to axial shift extracting the component by use of linear drivers 2.

The adjustment of the angle will be managed by the crane while the eccentric hook 100 is connected to the engine housing. In order to determine the correct angle of the component an angle gage will be used which is not shown on the mentioned Figure.

The mentioned adapters 6 are available to enable access for all components. A special feature of this concept is the eccentric hook 100 which is driven by a worm gear. The eccentric rolling hook 100 secures the assembly tool 1 during extraction of the component while it is connected to the engine housing and it enables to give a force in axial direction of the component.

Additionally, it makes thus possible to adjust the position of the component in radial direction. A clearance in between the stud and the eccentric hook 100 should be considered so that the crane operator can see whether the assembly tool is free from the engine housing or not.

As illustrated in Figure 7 dis-/assembly of the lower half components are also possible with the same assembly tool, however an auxiliary frame 16 as an additional embodiment to the assembly tool is required. Due to the fact that a crane is in the most cases not always useable for the lower half components the frame 16 combined with a fork lifter or other lifting device is enables to extract the components. The angle of the assembly tool can be changed with the frame 16. In case that a fork lifter cannot guarantee the necessary movement it is possible to use supplementary auxiliary means 17.

Referring to the disassembly procedure the following steps are consistent: As a first step the majority of portal/nuts will be removed. Then the spacers will be assembled on the component, upstream lifting points 7. Afterwards the assembly tool 1 will be lifted to the component by use of the crane so that the eccentric hook 100 is placed correctly to the engine housing 12. After securing of the eccentric hook 100, for example with electrically leaded means, the correct angle between engine housing 12 and assembly tool 1 will be adjusted by use the crane, with the procedure that downstream situated ropes get loose as consequence.

If the assembly tool 1 is in the right angle the height in radial direction can be adjusted with eccentric hook 100. After the assembly tool 1 will be mounted to the component by use of several bolts. From now on the component is connected to the assembly tool 1 and ready for extraction.

Therefore, the remaining bolts on the component engine housing 12 that are still supporting the component, will be removed. If necessary it can adjust the height with eccentric hook 100 to compensate the elasticity of the assembly tool 1. Then it will be started to shift the component outside the engine housing 12 and ready for lifting. The next step is to tighten the downstream ropes, and subsequently adjusting the correct position by using the crane.

The eccentric hook 100 shall be in clearance position and the assembly tool 1 with component shall be loose. The final step consists to disconnect the eccentric hook 100 from the engine housing 12 so that the assembly tool together with the component can be lifted and brought to the lay down area.

A similar sequence takes place for the lower situated components, when the additional frame 16 (see Figure 7) reaches the application.

### List of References Numerous

- 1: Assembly tool
- 2: Linear drivers
- 3: Wheels
- 5: Optional spacers
- 6: Adapters
- 7: Lifting points
- 11: Lifting beam
- 12: Engine housing
- 13: Counterpart
- 14: Machined surface
- 15: Component
- 16: Frame
- 17: Connection elements of the frame
- 100: Apparatus, eccentric hook
- 101: Outer structure/casing
- 102: Inner ring
- 103: Cut out, eccentric disposition

## Claims

1. An assembly tool (1) for mounting or dismantling, replacement and maintenance of a component (15) of an engine, the assembly tool comprising an apparatus and **characterized in that** the apparatus comprising an eccentric hook (100) having means to adjust, discretely or operatively communicating with a crane or other transport means the position of the component (15) in radial or quasi-radial position with respect to the engine housing (12), whereas the eccentric hook (100) comprising an outer structure/casing (101), an inner ring (102), a cut out with an eccentric deployment (103), whereas the eccentric hook (100) is self-locking or semi-self- locking with respect to a counterpart (13) attached to the engine housing (12).

2. The assembly tool according to claim 1, **characterized in that** the outer structure/casing (101) is movable/turnable while the inner ring (102) behaves stationary or the inner ring (102) is movable/turnable while the outer structure/casing (101) behaves stationary.

3. The assembly tool according to claim 1, **characterized in that** the eccentric rolling hook (100) is driven by electrical means or a worm gear.

4. The assembly tool according to claim 1, **characterized in that** the counterpart (13) is bolted to a machined surface (14) of the engine housing (12).

5. The assembly tool according to one of the claims 1 to 4, **characterized in that** the first designed assembly tool (1) comprising the operational eccentric hook (100), at least one lifting beam (11), at least one linear drivers (2), wheels (3), optionally spacers (5) for building the interface to the component, adapters (6), lifting points (7) for the main crane, wherein the eccentric hook (100) is connected to the engine housing (12) by giving in axial or quasi-axial direction a force for mounting or dismantling the component (15) from the engine housing.

6. The assembly tool according to claim 5, **characterized in that** the assembly tool (1) operates with respect to upper situated components.

7. The assembly tool according to one of the claims 1 to 4, **characterized in that** the second designed assembly tool with additional frame (1, 16) comprising the operational eccentric hook (100), at least one lifting beam (11), at least one linear drivers (2), wheels (3), optionally spacers (5) for building the interface to the component, adapters (6), connection elements (17), wherein the eccentric hook (100) is connected to the engine housing (12) by giving in axial or quasi-axial direction a force for mounting or dismantling the component (15) from the engine housing, whereas the frame (16) is combined with a fork lifter or other lifting device enables to extract and mounting the components (15).

8. The assembly tool according to claim 7, **characterized in that** the assembly tool with additional frame (1, 16) operates with respect to lower situated components.

9. The assembly tool according to one of the claims 1 to 8, **characterized in that** the assembly tool (1) or the assembly tool with additional frame (1, 16) not colliding with nearby components and auxiliary systems.

10. Method for mounting of a component (15) with the use of an assembly tool as claimed in one or more of claims 1 to 9, **characterized in that**:
- During the assembly procedure the assembly tool (1) is always connected to the crane;
- The adjustment of the angle with respect to the assembling direction of the component (15) is managed by the crane being actively connected to the eccentric hook (100) which being actively connected to a counterpart (13) attached to the engine housing (12);
- Adjusting and fixing the component (15) within the right operational position into the engine housing (12);
- Removing the assembly tool (1) from the impact region of the component (15).

11. Method for dismantling or replacement of a component (15) with the use of an assembly tool as claimed in one or more of claims 1 to 9, **characterized in that**:
- The majority of portal/nuts will be removed;
- The assembly tool (1) will be lifted to the component by use of the crane;
- The eccentric hook (100) is placed correctly to the engine housing (12);
- After securing the eccentric hook (100), the correct angle between engine housing (12) and assembly tool (1) will be adjusted by use of the crane;
- After the assembly tool (1) is in the right angle the height in radial direction will be adjusted with the eccentric hook (100);
- The assembly tool (1) will be mounted to the components (15) by use of several bolts;
- component (15) is connected to the assembly tool (1) and ready for extraction;
- The remaining bolts on the component (15) that are still supporting the component will be removed;
- Adjusting the height with eccentric hook (100) to compensate dimensional differences or elasticity of the assembly tool (1);
- Starting to shift the component (15) outside the engine housing (12) till it reaches the maximum stroke of the assembly tool (1);
- Adjusting with crane to keep the angle:
- The component (15) is outside the engine housing (12) and ready for lifting.

12. Method for maintenance of a component (15) with the use of an assembly tool as claimed in one or more of claims 1 to 9, **characterized in that**:
- The majority of portal/nuts will be removed;
- The assembly tool (1) will be lifted to the component (15) by use of the crane;
- The eccentric hook (100) is placed correctly to the engine housing (12);
- After securing the eccentric hook (100) the correct angle between engine housing (12) and assembly tool (1) will be adjusted by use of the crane;
- After the assembly tool (1) is in the right angle the height in radial direction will be adjusted with eccentric hook (100);
- The assembly tool (1) will be mounted to the component (15) by use of several bolts;
- The component (15) is connected to the assembly tool (1) and ready for extraction;
- The remaining bolts on the component (15) that are still supporting the component will be removed;
- Adjusting the height with eccentric hook (100) to compensate dimensional differences or elasticity of the assembly tool (1);
- Starting to shift the component (15) outside the engine housing (12) till it reaches the maximum stroke of the assembly tool (1);
- Adjusting with crane to keep the angle:
- The component (15) is outside the engine housing (12) and ready for lifting;
and after the maintenance operation is completed, the component (15) is remounted according to the following steps:
- During the assembly procedure the assembly tool (1) is always connected to the crane;
- The adjustment of the angle with respect to the assembling direction of the component (15) is managed by the crane being actively connected to the eccentric hook (100) which being actively connected to a counterpart (13) attached to the engine housing (12);
- Adjusting and fixing the component (15) within the right operational position into the engine housing (12);
- Removing the assembly tool from the impact region of the component (15).

13. Method for mounting of a component (15) with the use of an assembly tool as claimed in one or more of claims 1 to 9, **characterized in that**:
- During the assembly procedure the assembly tool with additional frame (1, 16) is connected to the crane or operates independently with other transport means;
- The adjustment of the angle with respect to the assembling direction of the component (15) is managed by the crane being actively connected to the eccentric hook (100) which being actively connected to a counterpart (13) attached to the engine housing (12);
- Adjusting and fixing the component (15) within the right operational position into the engine housing (12);
- Removing the assembly tool with additional frame (1, 16) from the impact region of the component (15).

14. Method for dismantling or replacement of a component (15) with the use of an assembly tool as claimed in one or more of claims 1 to 9, **characterized in that**:
- The majority of portal/nuts will be removed;
- The assembly tool with additional frame (1, 16) will be lifted to the component (15) by use of the crane or operates independently with other transport means;
- The eccentric hook (100) is placed correctly to the engine housing (12);
- After securing the eccentric hook (100) the correct angle between engine housing (12) and assembly tool with additional frame (1, 16) will be adjusted by use of the crane or other transport means;
- After the assembly tool with additional frame (1, 16) is in the right angle the height in radial direction will be adjusted with eccentric hook (100);
- The assembly tool with additional frame (1, 16) will be mounted to the component (15) by use of several bolts;
- The component (15) is connected to the assembly tool with additional frame (1, 16) and ready for extraction;
- The remaining bolts on the component (15) that are still supporting the component (15) will be removed;
- Adjusting the height with eccentric hook (100) to compensate dimensional differences or elasticity of the assembly tool with additional frame (1, 16);
- Starting to shift the component (15) outside the engine housing (12) till it reaches the maximum stroke of the assembly tool with additional frame (1, 16);
- Adjusting with crane or other transport means to keep the angle;
- The component (15) is outside the engine housing (12) and ready for lifting.

15. Method for maintenance of a component (15) with the use of an assembly tool as claimed in one or more of claims 1 to 9, **characterized in that**:
- The majority of portal/nuts will be removed;
- The assembly tool with additional frame (1, 16) will be lifted to the component (15) by use of the crane or operates independently with other transport means;
- The eccentric hook (100) is placed correctly to the engine housing (12);
- After securing the eccentric hook (100) the correct angle between engine housing (12) and assembly tool with additional frame (1, 16) will be adjusted by use of the crane or other transport means;
- After the assembly tool with additional frame (1, 16) is in the right angle the height in radial direction will be adjusted with eccentric hook (100);
- The assembly tool with additional frame (1, 16) will be mounted to the component (15) by use of several bolts;
- The component (15) is connected to the assembly tool with additional frame (1, 16) and ready for extraction;
- The remaining bolts on the component (15) that are still supporting the component (15) will be removed;
- Adjusting the height with eccentric hook (100) to compensate dimensional differences or elasticity of the assembly tool with additional frame (1, 16);
- Starting to shift the component (15) outside the engine housing (12) till it reaches the maximum stroke of the assembly tool with additional frame (1, 16);
- Adjusting with crane or other transport means to keep the angle:
- The component (15) is outside the engine housing (12) and ready for lifting;
and after the maintenance operation is completed, the component (15) is remounted according to the following steps:
- During the assembly procedure the assembly tool with additional frame (1, 16) is connected to the crane or operates independently with other transport means;
- The adjustment of the angle with respect to the assembling direction of the component (15) is managed by the crane or other transport means being actively connected to the eccentric hook (100) which being actively connected to a counterpart (13) attached to the engine housing (12);
- Adjusting and fixing the component (15) within the right operational position into the engine housing (12);
- Removing the assembly tool with additional frame (1, 16) from the impact region of the component (15).

## Patentansprüche

1. Montagewerkzeug (1) für die Montage oder Demontage, den Austausch und die Wartung eines Bauteils (15) eines Motors, welches Montagewerkzeug eine Vorrichtung umfasst und **dadurch gekennzeichnet ist, dass** die Vorrichtung einen exzentrischen Haken (100) aufweist, der eine Einrichtung zum diskreten Einstellen der Position des Bauteils (15) in radialer oder quasi-radialer Position in Bezug auf das Motorgehäuse (12) oder zum Einstellen derselben in Wirkverbindung mit einem Kran oder einer anderen Transporteinrichtung aufweist, wobei der exzentrische Haken (100) einen äußeren Aufbau/ein äußeres Gehäuse (101), einen inneren Ring (102), einen Ausschnitt mit einer exzentrischen Anordnung (103) aufweist, wobei der exzentrische Haken (100) in Bezug auf ein an dem Motorgehäuse (12) angebrachtes Gegenstück (13) selbstverriegelnd oder teilselbstverriegelnd ist.

2. Montagewerkzeug nach Anspruch 1, **dadurch gekennzeichnet, dass** der äußere Aufbau/das äußere Gehäuse (101) beweglich/drehbar ist, während der innere Ring (102) sich stationär verhält, oder der innere Ring (102) beweglich/drehbar ist, während sich der äußere Aufbau/das äußere Gehäuse (101) stationär verhält.

3. Montagewerkzeug nach Anspruch 1, **dadurch gekennzeichnet, dass** der exzentrische Rollhaken (100) durch eine elektrische Einrichtung oder ein Schneckengetriebe angetrieben ist.

4. Montagewerkzeug nach Anspruch 1, **dadurch gekennzeichnet, dass** das Gegenstück (13) mit einer bearbeiteten Oberfläche (14) des Motorgehäuses (12) verschraubt ist.

5. Montagewerkzeug nach einem der Ansprüche 1 bis 4, **dadurch gekennzeichnet, dass** das Montagewerkzeug (1) der ersten Konstruktion den betriebsfähigen exzentrischen Haken (100), mindestens eine Hubtraverse (11), mindestens einen Linearantrieb (2), Räder (3), optional Abstandhalter (5) zum Aufbau der Schnittstelle mit dem Bauteil, Adapter (6), Hebepunkte (7) für den Hauptkran aufweist, wobei der exzentrische Haken (100) mit dem Motorgehäuse (12) verbunden wird, indem in axialer oder quasi-axialer Richtung eine Kraft für die Montage oder Demontage des Bauteils (15) an dem Motorgehäuse aufgebracht wird.

6. Montagewerkzeug nach Anspruch 5, **dadurch gekennzeichnet, dass** das Montagewerkzeug (1) in Bezug auf oben gelegene Bauteile arbeitet.

7. Montagewerkzeug nach einem der Ansprüche 1 bis 4, **dadurch gekennzeichnet, dass** das Montagewerkzeug mit einem zusätzlichen Rahmen (1, 16) der zweiten Konstruktion den betriebsfähigen exzentrischen Haken (100), mindestens eine Hubtraverse (11), mindestens einen Linearantrieb (2), Räder (3), optional Abstandhalter (5) zum Aufbau der Schnittstelle mit dem Bauteil, Adaptern (6), Verbindungselemente (17) aufweist, wobei der exzentrische Haken (100) mit dem Motorgehäuse (12) verbunden wird, indem in axialer oder quasiaxialer Richtung eine Kraft für die Montage oder Demontage des Bauteils (15) an dem Motorgehäuse aufgebracht wird, wobei der Rahmen (16) mit einem Gabelstapler oder einer anderen Hebevorrichtung kombiniert wird, was es ermöglicht, die Bauteile (15) herauszuziehen und zu montieren.

8. Montagewerkzeug nach Anspruch 7, **dadurch gekennzeichnet, dass** das Montagewerkzeug mit zusätzlichem Rahmen (1, 16) in Bezug auf unten gelegene Bauteile arbeitet.

9. Montagewerkzeug nach einem der Ansprüche 1 bis 8, **dadurch gekennzeichnet, dass** das Montagewerkzeug (1) oder das Montagewerkzeug mit zusätzlichem Rahmen (1, 16) nicht mit nahe gelegenen Bauteilen und Hilfssystemen kollidieren.

10. Verfahren für die Montage eines Bauteils (15) unter Verwendung eines Montagewerkzeugs nach einem oder mehreren der Ansprüche 1 bis 9, **dadurch gekennzeichnet, dass**:
- das Montagewerkzeug (1) während des Montagevorgangs stets mit dem Kran verbunden ist;
- die Einstellung des Winkels in Bezug auf die Montagerichtung des Bauteils (15) dadurch erfolgt, dass der Kran aktiv mit dem exzentrischen Haken (100) verbunden ist, welcher wiederum mit einem an dem Motorgehäuse (12) angebrachten Gegenstück (13) aktiv verbunden ist;
- Einstellen und Befestigen des Bauteils (15) innerhalb der ordnungsgemäßen betrieblichen Position in dem Motorgehäuse (12);
- Entfernen des Montagewerkzeugs (1) aus dem Auftreffgebiet des Bauteils (15).

11. Verfahren für die Demontage oder den Austausch eines Bauteils (15) unter Verwendung eines Montagewerkzeugs nach einem oder mehreren der Ansprüche 1 bis 9, **dadurch gekennzeichnet, dass**:
- der Großteil von Portalen/Muttern entfernt wird;
- das Montagewerkzeug (1) unter Verwendung des Krans zu dem Bauteil gehoben wird;
- der exzentrische Haken (100) korrekt am Motorgehäuse (12) angeordnet wird;
- nach Befestigung des exzentrischen Hakens (100) der korrekte Winkel zwischen Motorgehäuse (12) und Montagewerkzeug (1) unter Verwendung des Krans eingestellt wird;
- nachdem das Montagewerkzeug (1) im richtigen Winkel ist, die Höhe in radialer Richtung mit dem exzentrischen Haken (100) eingestellt wird;
- das Montagewerkzeug (1) unter Verwendung von mehreren Schrauben an den Bauteilen (15) befestigt wird;
- das Bauteil (15) mit dem Montagewerkzeug (1) verbunden wird und bereit für die Entnahme ist;
- die verbleibenden Schrauben an dem Bauteil (15), die das Bauteil immer noch halten, entfernt werden;
- die Höhe mit dem exzentrischen Haken (100) eingestellt wird, um Größenunterschiede oder die Elastizität des Montagewerkzeugs (1) auszugleichen;
- das Verschieben des Bauteils (15) nach außerhalb des Motorgehäuses (12) begonnen wird, bis es den maximalen Hub des Montagewerkzeugs (1) erreicht;
- eine Einstellung mit dem Kran zum Einhalten des Winkels erfolgt;
- das Bauteil (15) außerhalb des Motorgehäuses (12) ist und bereit zum Anheben ist.

12. Verfahren zur Wartung eines Bauteils (15) unter Verwendung eines Montagewerkzeugs nach einem oder mehreren der Ansprüche 1 bis 9, **dadurch gekennzeichnet, dass**:
- der Großteil von Portalen/Muttern entfernt wird;
- das Montagewerkzeug (1) unter Verwendung des Krans zu dem Bauteil gehoben wird;
- der exzentrische Haken (100) korrekt am Motorgehäuse (12) angeordnet wird;
- nach Befestigung des exzentrischen Hakens (100) der korrekte Winkel zwischen Motorgehäuse (12) und Montagewerkzeug (1) unter Verwendung des Krans eingestellt wird;
- nachdem das Montagewerkzeug (1) im richtigen Winkel ist, die Höhe in radialer Richtung mit dem exzentrischen Haken (100) eingestellt wird;
- das Montagewerkzeug (1) unter Verwendung von mehreren Schrauben an dem Bauteil (15) befestigt wird;
- das Bauteil (15) mit dem Montagewerkzeug (1) verbunden wird und bereit für die Entnahme ist;
- die verbleibenden Schrauben an dem Bauteil (15), die das Bauteil immer noch halten, entfernt werden;
- die Höhe mit dem exzentrischen Haken (100) eingestellt wird, um Größenunterschiede oder die Elastizität des Montagewerkzeug (1) auszugleichen;
- das Verschieben des Bauteils (15) nach außerhalb des Motorgehäuses (12) begonnen wird, bis es den maximalen Hub des Montagewerkzeugs (1) erreicht;
- eine Einstellung mit dem Kran zum Einhalten des Winkels erfolgt;
- das Bauteil (15) außerhalb des Motorgehäuses (12) ist und bereit zum Anheben ist;
und nach Vollenden des Wartungsvorgangs das Bauteil (15) gemäß den folgenden Schritten wieder montiert wird:
- das Montagewerkzeug (1) ist während des Montagevorgangs stets mit dem Kran verbunden;
- die Einstellung des Winkels in Bezug auf die Montagerichtung des Bauteils (15) erfolgt dadurch, dass der Kran aktiv mit dem exzentrischen Haken (100) verbunden ist, welcher wiederum mit einem an dem Motorgehäuse (12) angebrachten Gegenstück (13) aktiv verbunden ist;
- Einstellen und Befestigen des Bauteils (15) innerhalb der ordnungsgemäßen betrieblichen Position in dem Motorgehäuse (12);
- Entfernen des Montagewerkzeugs (1) aus dem Auftreffgebiet des Bauteils (15).

13. Verfahren für die Montage eines Bauteils (15) unter Verwendung eines Montagewerkzeugs nach einem der Ansprüche 1 bis 9, **dadurch gekennzeichnet, dass**:
- während des Montagevorgangs das Montagewerkzeug mit zusätzlichem Rahmen (1, 16) mit dem Kran verbunden wird oder unabhängig mit einer anderen Transporteinrichtung arbeitet;
- die Einstellung des Winkels in Bezug auf die Montagerichtung des Bauteils (15) dadurch erfolgt, dass der Kran aktiv mit dem exzentrischen Haken (100) verbunden ist, welcher wiederum mit einem an dem Motorgehäuse (12) angebrachten Gegenstück (13) aktiv verbunden ist;
- Einstellen und Befestigen des Bauteils (15) innerhalb der ordnungsgemäßen betrieblichen Position in dem Motorgehäuse (12);
- Entfernen des Montagewerkzeugs mit zusätzlichem Rahmen (1, 16) aus dem Auftreffgebiet des Bauteils (15).

14. Verfahren für die Demontage oder den Austausch eines Bauteils (15) unter Verwendung eines Montagewerkzeugs nach einem oder mehreren der Ansprüche 1 bis 9, **dadurch gekennzeichnet, dass**:
- der Großteil von Portalen/Muttern entfernt wird;
- das Montagewerkzeug mit zusätzlichem Rahmen (1, 16) unter Verwendung des Krans zu dem Bauteil gehoben wird oder unabhängig mit einer anderen Transporteinrichtung arbeitet;
- der exzentrische Haken (100) korrekt am Motorgehäuse (12) angeordnet wird;
- nach Befestigung des exzentrischen Hakens (100) der korrekte Winkel zwischen Motorgehäuse (12) und Montagewerkzeug mit zusätzlichem Rahmen (1, 16) unter Verwendung des Krans oder der anderen Transporteinrichtung eingestellt wird;
- nachdem das Montagewerkzeug mit zusätzlichem Rahmen (1, 16) im richtigen Winkel ist, die Höhe in radialer Richtung mit dem exzentrischen Haken (100) eingestellt wird;
- das Montagewerkzeug mit zusätzlichem Rahmen (1, 16) unter Verwendung von mehreren Schrauben an dem Bauteil (15) befestigt wird;
- das Bauteil (15) mit dem Montagewerkzeug mit zusätzlichem Rahmen (1, 16) verbunden wird und bereit für die Entnahme ist;
- die verbleibenden Schrauben an dem Bauteil (15), die das Bauteil immer noch halten, entfernt werden;
- die Höhe mit dem exzentrischen Haken (100) eingestellt wird, um Größenunterschiede oder die Elastizität des Montagewerkzeugs mit zusätzlichem Rahmen (1, 16) auszugleichen;
- das Verschieben des Bauteils (15) nach außerhalb des Motorgehäuses (12) begonnen wird, bis es den maximalen Hub des Montagewerkzeugs mit zusätzlichem Rahmen (1, 16) erreicht;
- eine Einstellung mit dem Kran oder der anderen Transporteinrichtung zum Einhalten des Winkels erfolgt;
- das Bauteil (15) außerhalb des Motorgehäuses (12) ist und bereit zum Anheben ist.

15. Verfahren zur Wartung eines Bauteils (15) unter Verwendung eines Montagewerkzeugs nach einem oder mehreren der Ansprüche 1 bis 9, **dadurch gekennzeichnet, dass**:
- der Großteil von Portalen/Muttern entfernt wird;
- das Montagewerkzeug mit zusätzlichem Rahmen (1, 16) unter Verwendung des Krans zu dem Bauteil gehoben wird oder unabhängig mit einer anderen Transporteinrichtung arbeitet;
- der exzentrische Haken (100) korrekt am Motorgehäuse (12) angeordnet wird;
- nach Befestigung des exzentrischen Hakens (100) der korrekte Winkel zwischen Motorgehäuse (12) und Montagewerkzeug mit zusätzlichem Rahmen (1, 16) unter Verwendung des Krans oder der anderen Transporteinrichtung eingestellt wird;
- nachdem das Montagewerkzeug mit zusätzlichem Rahmen (1, 16) im richtigen Winkel ist, die Höhe in radialer Richtung mit dem exzentrischen Haken (100) eingestellt wird;
- das Montagewerkzeug mit zusätzlichem Rahmen (1, 16) unter Verwendung von mehreren Schrauben an den Bauteilen (15) befestigt wird;
- das Bauteil (15) mit dem Montagewerkzeug mit zusätzlichem Rahmen (1, 16) verbunden wird und bereit für die Entnahme ist;
- die verbleibenden Schrauben an dem Bauteil (15), die das Bauteil immer noch halten, entfernt werden;
- die Höhe mit dem exzentrischen Haken (100) eingestellt wird, um Größenunterschiede oder die Elastizität des Montagewerkzeugs mit zusätzlichem Rahmen (1, 16) auszugleichen;
- das Verschieben des Bauteils (15) nach außerhalb des Motorgehäuses (12) begonnen wird, bis es den maximalen Hub des Montagewerkzeugs mit zusätzlichem Rahmen (1, 16) erreicht;
- eine Einstellung mit dem Kran zum Einhalten des Winkels erfolgt;
- das Bauteil (15) außerhalb des Motorgehäuses (12) ist und bereit zum Anheben ist;
und nach Vollenden des Wartungsvorgangs das Bauteil (15) gemäß den folgenden Schritten wieder montiert wird:
- das Montagewerkzeug mit zusätzlichem Rahmen (1, 16) ist während des Montagevorgangs stets mit dem Kran verbunden oder arbeitet unabhängig mit der anderen Transporteinrichtung;
- die Einstellung des Winkels in Bezug auf die Montagerichtung des Bauteils (15) erfolgt dadurch, dass der Kran oder die andere Transporteinrichtung aktiv mit dem exzentrischen Haken (100) verbunden ist, welcher wiederum mit einem an dem Motorgehäuse (12) angebrachten Gegenstück (13) aktiv verbunden ist;
- Einstellen und Befestigen des Bauteils (15) innerhalb der ordnungsgemäßen betrieblichen Position in dem Motorgehäuse (12);
- Entfernen des Montagewerkzeugs mit zusätzlichem Rahmen (1, 16) aus dem Auftreffgebiet des Bauteils (15).

## Revendications

1. Outil d'assemblage (1) pour le montage ou le démontage, le remplacement et l'entretien d'un composant (15) d'un moteur, l'outil d'assemblage comprenant un appareil et étant **caractérisé en ce que** l'appareil comprend un crochet excentrique (100) ayant des moyens pour ajuster, communiquant discrètement ou opérationnellement avec une grue ou d'autres moyens de transport, la position du composant (15) dans la position radiale ou quasi-radiale par rapport au logement de moteur (12), alors que le crochet excentrique (100) comprend une structure/boîtier externe (101), une bague interne (102), une découpe avec un déploiement excentrique (103), alors que le crochet excentrique (100) est à verrouillage automatique ou semi-automatique par rapport à une contrepartie (13) fixée sur le logement de moteur (12).

2. Outil d'assemblage selon la revendication 1, **caractérisé en ce que** la structure/boîtier externe (101) est mobile/rotative alors que la bague interne (102) reste fixe ou la bague interne (102) est mobile/rotative alors que la structure/boîtier externe (101) reste fixe.

3. Outil d'assemblage selon la revendication 1, **caractérisé en ce que** le crochet roulant excentrique (100) est entraîné par des moyens électriques ou un engrenage à vis sans fin.

4. Outil d'assemblage selon la revendication 1, **caractérisé en ce que** la contrepartie (13) est boulonnée sur une surface usinée (14) du logement de moteur (12).

5. Outil d'assemblage selon l'une des revendications 1 à 4, **caractérisé en ce que** le premier outil d'assemblage (1) conçu comprend le crochet excentrique (100) opérationnel, au moins une poutre de levage (11), au moins des dispositifs d'entraînement linéaires (2), des roues (3), facultativement des dispositifs d'espacement (5) pour réaliser l'interface par rapport au composant, des adaptateurs (6), des points de levage (7) pour la grue principale, dans lequel le crochet excentrique (100) est raccordé au logement de moteur (12) en donnant, dans une direction axiale ou quasi-axiale, une force pour monter ou démonter le composant (15) du logement de moteur.

6. Outil d'assemblage selon la revendication 5, **caractérisé en ce que** l'outil d'assemblage (1) fonctionne par rapport aux composants situés en haut.

7. Outil d'assemblage selon l'une des revendications 1 à 4, **caractérisé en ce que** le second outil d'assemblage conçu avec le bâti (1, 16) supplémentaire comprend le crochet excentrique (100) opérationnel, au moins une poutre de levage (11), au moins un dispositif d'entraînement linéaire (2) ; des roues (3), facultativement des dispositifs d'espacement (5) pour réaliser l'interface par rapport au composant, des adaptateurs (6), des éléments de raccordement (17), dans lequel le crochet excentrique (100) est raccordé au logement de moteur (12) en donnant, dans une direction axiale ou quasi-axiale, une force pour monter ou démonter le composant (15) du logement de moteur, alors que le bâti (16) est combiné avec un chariot élévateur à fourche ou un autre dispositif de levage qui permet d'extraire et de monter les composants (15).

8. Outil d'assemblage selon la revendication 7, **caractérisé en ce que** l'outil d'assemblage avec le bâti (1, 16) supplémentaire fonctionne par rapport à des composants situés plus bas.

9. Outil d'assemblage selon l'une des revendications 1 à 8, **caractérisé en ce que** l'outil d'assemblage (1) ou l'outil d'assemblage avec le bâti (1, 16) supplémentaire n'entre pas en collision avec les composants ni les systèmes auxiliaires à proximité.

10. Procédé pour monter un composant (15) à l'aide d'un outil d'assemblage selon une ou plusieurs des revendications 1 à 9, **caractérisé en ce que** :
pendant la procédure d'assemblage, l'outil d'assemblage (1) est toujours raccordé à la grue ;
l'ajustement de l'angle par rapport à la direction d'assemblage du composant (15) est géré par la grue qui est activement raccordée au crochet excentrique (100) qui est activement raccordé à une contrepartie (13) fixée au logement de moteur (12) ;
ajuster et fixer le composant (15) dans la bonne position opérationnelle dans le logement de moteur (12) ;
retirer l'outil d'assemblage (1) de la région d'impact du composant (15).

11. Procédé pour démonter ou remplacer un composant (15) à l'aide d'un outil d'assemblage selon une ou plusieurs des revendications 1 à 9, **caractérisé en ce que** :
la majeure partie du portique/écrous est retirée ;
l'outil d'assemblage (1) est levé jusqu'au composant à l'aide de la grue ;
le crochet excentrique (100) est placé correctement sur le logement de moteur (12) ;
après avoir fixé le crochet excentrique (100), l'angle correct entre le logement de moteur (12) et l'outil d'assemblage (1) est ajusté à l'aide de la grue ;
après que l'outil d'assemblage (1) a été placé dans le bon angle, la hauteur dans la direction radiale est ajustée avec le crochet excentrique (100) ;
l'outil d'assemblage (1) est monté sur les composants (15) à l'aide de plusieurs boulons ;
le composant (15) est raccordé à l'outil d'assemblage (1) et prêt pour l'extraction ;
les boulons résiduels sur le composant (15) qui supportent encore le composant sont retirés ;
ajuster la hauteur avec le crochet excentrique (100) pour compenser les différences de dimension ou l'élasticité de l'outil d'assemblage (1) ;
commencer à sortir le composant (15) du logement de moteur (12) jusqu'à ce qu'il atteigne la course maximum de l'outil d'assemblage (1) ;
ajuster avec la grue pour maintenir l'angle ;
le composant (15) est à l'extérieur du logement de moteur (12) et prêt à lever.

12. Procédé pour l'entretien d'un composant (15) à l'aide d'un outil d'assemblage selon une ou plusieurs des revendications 1 à 9, **caractérisé en ce que** :
la majeure partie du portique/écrous est retirée ;
l'outil d'assemblage (1) est levé jusqu'au composant (15) à l'aide de la grue ;
le crochet excentrique (100) est placé correctement sur le logement de moteur (12) ;
après avoir fixé le crochet excentrique (100), l'angle correct entre le logement de moteur (12) et l'outil d'assemblage (1) est ajusté à l'aide de la grue ;
après que l'outil d'assemblage (1) a été placé dans le bon angle, la hauteur dans la direction radiale est ajustée avec le crochet excentrique (100) ;
l'outil d'assemblage (1) est monté sur le composant (15) à l'aide de plusieurs boulons ;
le composant (15) est raccordé à l'outil d'assemblage (1) et prêt pour l'extraction ;
les boulons résiduels sur le composant (15) qui supportent encore le composant, sont retirés ;
ajuster la hauteur avec le crochet excentrique (100) pour compenser les différences de dimension ou l'élasticité de l'outil d'assemblage (1) ;
commencer à sortir le composant (15) du logement de moteur (12) jusqu'à ce qu'il atteigne la course maximum de l'outil d'assemblage (1) ;
ajuster avec la grue pour maintenir l'angle ;
le composant (15) est à l'extérieur du logement de moteur (12) et prêt pour le levage ;
et après l'achèvement de l'opération d'entretien, le composant (15) est remonté selon les étapes suivantes :
pendant la procédure d'assemblage, l'outil d'assemblage (1) est toujours raccordé à la grue ;
l'ajustement de l'angle par rapport à la direction d'assemblage du composant (15) est géré par la grue qui est activement raccordée au crochet excentrique (100) qui est activement raccordé à une contrepartie (13) fixée au logement de moteur (12) ;
ajuster et fixer le composant (15) dans la bonne position opérationnelle dans le logement de moteur (12) ;
retirer l'outil d'assemblage de la région d'impact du composant (15).

13. Procédé pour monter un composant (15) à l'aide d'un outil d'assemblage selon une ou plusieurs des revendications 1 à 9, **caractérisé en ce que** :
pendant la procédure d'assemblage, l'outil d'assemblage avec le bâti (1, 16) supplémentaire est raccordé à la grue ou fonctionne indépendamment avec d'autres moyens de transport ;
l'ajustement de l'angle par rapport à la direction d'assemblage du composant (15) est géré par la grue qui est activement raccordée au crochet excentrique (100) qui est activement raccordé à une contrepartie (13) fixée sur le logement de moteur (12) ;
ajuster et fixer le composant (15) dans la bonne position opérationnelle dans le logement de moteur (12) ;
retirer l'outil d'assemblage avec le bâti (1, 16) supplémentaire de la région d'impact du composant (15).

14. Procédé pour démonter ou remplacer un composant (15) à l'aide d'un outil d'assemblage selon une ou plusieurs des revendications 1 à 9, **caractérisé en ce que** :
la majeure partie du portique/écrous est retirée ;
l'outil d'assemblage avec le bâti (1, 16) supplémentaire est levé jusqu'au composant (15) à l'aide de la grue ou fonctionne indépendamment avec d'autres moyens de transport ;
le crochet excentrique (100) est placé correctement sur le logement de moteur (12) ;
après avoir fixé le crochet excentrique (100), l'angle correct entre le logement de moteur (12) et l'outil d'assemblage avec le bâti (1, 16) supplémentaire est ajusté à l'aide de la grue ou d'autres moyens de transport ;
après que l'outil d'assemblage avec le bâti (1, 16) supplémentaire a été placé dans le bon angle, la hauteur dans la direction radiale est ajustée avec le crochet excentrique (100) ;
l'outil d'assemblage avec le bâti (1, 16) supplémentaire est monté sur le composant (15) à l'aide de plusieurs boulons ;
le composant (15) est raccordé à l'outil d'assemblage avec le bâti (1, 16) supplémentaire et prêt pour l'extraction ;
les boulons résiduels sur le composant (15) qui supportent encore le composant (15) sont retirés ;
ajuster la hauteur avec le crochet excentrique (100) pour compenser les différences de dimension ou l'élasticité de l'outil d'assemblage avec le bâti (1, 16) supplémentaire ;
commencer à sortir le composant (15) du logement de moteur (12) jusqu'à ce qu'il atteigne la course maximum de l'outil d'assemblage avec le bâti (1, 16) supplémentaire ;
ajuster avec la grue ou d'autres moyens de transport pour maintenir l'angle ;
le composant (15) est à l'extérieur du logement de moteur (12) et prêt pour le levage.

15. Procédé pour l'entretien d'un composant (15) à l'aide d'un outil d'assemblage selon une ou plusieurs des revendications 1 à 9, **caractérisé en ce que** :
la majeure partie du portique/écrous est retirée ;
l'outil d'assemblage avec le bâti (1, 16) supplémentaire est levé jusqu'au composant (15) à l'aide de la grue ou fonctionne indépendamment avec d'autres moyens de transport ;
le crochet excentrique (100) est placé correctement sur le logement de moteur (12) ;
après avoir fixé le crochet excentrique (100), l'angle correct entre le logement de moteur (12) et l'outil d'assemblage avec le bâti (1, 16) supplémentaire est ajusté à l'aide de la grue ou d'autres moyens de transport ;
après que l'outil d'assemblage avec le bâti (1, 16) supplémentaire a été placé dans le bon angle, la hauteur dans la direction radiale est ajustée avec le crochet excentrique (100) ;
l'outil d'assemblage avec le bâti (1, 16) supplémentaire est monté sur le composant (15) à l'aide de plusieurs boulons ;
le composant (15) est raccordé à l'outil d'assemblage avec le bâti (1, 16) supplémentaire et prêt pour l'extraction ;
les boulons résiduels sur le composant (15) qui supportent encore le composant (15) sont retirés ;
ajuster la hauteur avec le crochet excentrique (100) pour compenser des différences de dimension ou l'élasticité de l'outil d'assemblage avec le bâti (1, 16) supplémentaire ;
commencer à sortir le composant (15) du logement de moteur (12) jusqu'à ce qu'il atteigne la course maximum de l'outil d'assemblage avec le bâti (1, 16) supplémentaire ;
ajuster avec la grue ou d'autres moyens de transport pour maintenir l'angle ;
le composant (15) est à l'extérieur du logement de moteur (12) et prêt pour le levage ;
et après l'achèvement de l'opération d'entretien, le composant (15) est remonté selon les étapes suivantes :
pendant la procédure d'assemblage, l'outil d'assemblage avec le bâti (1, 16) supplémentaire est raccordé à la grue ou fonctionne indépendamment avec d'autres moyens de transport ;
l'ajustement de l'angle par rapport à la direction d'assemblage du composant (15) est géré par la grue ou d'autres moyens de transport qui sont activement raccordés au crochet excentrique (100) qui est raccordé activement à la contrepartie (13) fixée sur le logement de moteur (12) ;
ajuster et fixer le composant (15) dans la bonne position opérationnelle dans le logement de moteur (12) ;
retirer l'outil d'assemblage avec le bâti (1, 16) supplémentaire de la région d'impact du composant (15).
